# EUROPEAN PATENT APPLICATION

(11) **EP 4 808 102 A1**
(43) Date of publication of application: **16.09.2026**
(21) Application number: 26163820.9
(22) Date of filing: 11.03.2026
(51) Int. Cl.: H04N 1/00, H04N 1/10

(54) **IMAGE READING APPARATUS**

(30) Priority: 12.03.2025 JP 2025039157
(71) Applicant: KYOCERA Document Solutions Inc., Osaka-shi, Osaka 540-8585 (JP)
(72) Inventor: TERADA, Tsuyoshi, Osaka, 540-8585 (JP)
(74) Representative: Plougmann Vingtoft a/s

(57) **Abstract**

A first reference portion includes a lower surface of a first color. A second reference portion is adjacent to the first reference portion in a first direction, and includes a lower surface of a second color. An end reference portion is arranged in an end portion of a movable region for a scanning unit to be adjacent to the first reference portion in a second direction. The end reference portion includes a lower surface that includes surfaces of a plurality of specific colors that are aligned in a primary scanning direction. One of the plurality of specific colors is a third color. A data processing section performs a color determination process to determine a color for reference pixel data being included in line image data and corresponding to a reference region. A unit driving apparatus performs drive operations to position the scanning unit at a home position, where the drive operations performed by the unit driving apparatus are successively selected from a plurality of trial drive operations according to a determination result obtained by the color determination process, and the scanning unit is moved a different distance or in a different direction in each of the plurality of trial drive operations.

## Description

The present disclosure relates to an image reading apparatus.

### BACKGROUND

The present disclosure relates to an image reading apparatus that includes a function to position a scanning unit at a home position.

An image reading apparatus may include a function to perform a stationary document reading process. The stationary document reading process is a process of reading an image of a document placed on a platen glass. The stationary document reading process is also called a flatbed image reading process.

In the stationary document reading process, a unit driving apparatus moves a scanning unit below the platen glass from a predetermined home position, the scanning unit including a light emitter and a light guiding member that are formed in a primary scanning direction.

The image reading apparatus further includes an image sensor, an analog front end (AFE), and a data processing section. The image sensor receives light guided by the light guiding member, and outputs a line image signal that represents an amount of light received. The AFE converts the line image signal into line image data that includes a plurality of pieces of digital pixel data. The data processing section performs processing on the line image data.

Note that the scanning unit may include a contact image sensor unit. The contact image sensor unit includes the light emitter, the light guiding member serving as a condenser, and a CMOS-type image sensor.

The home position is a position shifted in a secondary scanning direction from a region situated below the platen glass. A movement speed of the scanning unit becomes stable during the movement of the scanning unit from the home position to the region situated below the platen glass.

Thus, it is necessary for the unit driving apparatus to position the scanning unit at the home position before the stationary document reading process is performed.

For example, it is known that a mark that represents the home position is formed in a reference plate used for shading correction and arranged next to the platen glass. In this case, the data processing section detects the mark in the line image data to detect that the scanning unit has arrived at the home position.

### SUMMARY

An image reading apparatus according to an aspect of the present disclosure includes a platen plate portion, a contact plate portion, a document transportation apparatus, a scanning unit, a primary image sensor, a unit driving apparatus, a data processing section, a first reference portion, a second reference portion, and an end reference portion. The platen plate portion is a portion in the form of a transparent plate, where a document is placed on the portion. The contact plate portion is a portion in the form of a transparent plate, and is arranged on a side of the platen plate portion in a first direction. The document transportation apparatus transports the document along a transportation path that passes on an upper surface of the contact plate portion. The scanning unit includes a light emitter and a light guiding section that are each arranged in a primary scanning direction that intersects the first direction. The scanning unit is movable in a movable region in the first direction and in a second direction opposite to the first direction, where the movable region includes a region under the platen plate portion and a region under the contact plate portion. The primary image sensor receives light guided by the light guiding section, and outputs a line image signal that represents an amount of light received. The unit driving apparatus moves the scanning unit in the first direction or the second direction in the movable region. The data processing section performs processing on line image data including a plurality of pieces of pixel data and corresponding to the line image signal output by the primary image sensor. The first reference portion is arranged along a side edge that forms an end of the platen plate portion in the primary scanning direction, and includes a lower surface of a first color. The second reference portion is arranged between the first reference portion and the contact plate portion to be adjacent to the first reference portion in the first direction. The second reference portion includes a lower surface of a second color different from the first color. The end reference portion is arranged in an end region of the movable region in the second direction to be adjacent to the first reference portion in the second direction. The end reference portion includes a lower surface that includes surfaces of a plurality of specific colors that are aligned in the primary scanning direction. The contact plate portion is arranged across a target region and a reference region in the primary scanning direction. The target region is occupied by the platen plate portion, and the reference region is occupied by the first reference portion, the second reference portion, and the end reference portion. One of the plurality of specific colors is a color different from the first color and the second color. The data processing section performs a color determination process to determine whether reference pixel data is data for the first color, data for the second color, or data for the plurality of specific colors, where the reference pixel data is a plurality of pieces of pixel data being included in the line image data and corresponding to the reference region. The unit driving apparatus performs drive operations to position the scanning unit at a home position situated between the platen plate portion and the contact plate portion in the movable region. The drive operations performed by the unit driving apparatus are successively selected from a plurality of trial drive operations according to a determination result obtained by the color determination process, and the scanning unit is moved a different distance or in a different direction in each of the plurality of trial drive operations.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

Fig. 1 illustrates a configuration of an image reading apparatus according to a first embodiment;
Fig. 2 illustrates a configuration of a CIS unit;
Fig. 3 is a block diagram illustrating configurations of a user interface and a control apparatus that are included in the image reading apparatus according to the first embodiment;
Fig. 4 is a block diagram illustrating configurations of processing modules that are included in a CPU of the image reading apparatus according to the first embodiment;
Fig. 5 is a top view of a body included in the image reading apparatus according to the first embodiment;
Fig. 6 is a cross-sectional view of an upper portion of the body included in the image reading apparatus according to the first embodiment;
Fig. 7 is a top view of a portion around an end reference portion of the body included in the image reading apparatus according to the first embodiment;
Fig. 8 is a flowchart of an example of a procedure of home positioning control performed by the image reading apparatus according to the first embodiment;
Fig. 9 is a flowchart of an example of a procedure of pre-adjustment control performed in the image reading apparatus according to the first embodiment;
Fig. 10 illustrates a configuration of an image reading apparatus according to a second embodiment;
Fig. 11 is a cross-sectional view of an upper portion of the body included in the image reading apparatus according to the second embodiment;
Fig. 12 is a flowchart of an example of a procedure of home positioning control performed by the image reading apparatus according to the second embodiment; and
Fig. 13 illustrates a configuration of a scanning unit according to a modification of the image reading apparatus according to the first embodiment.

### DETAILED DESCRIPTION

Embodiments of the present disclosure will now be described below with reference to the drawings. Note that the following embodiments are merely examples in which the present disclosure is embodied, and are not intended to limit the scope of the present disclosure.

### First Embodiment

An image reading apparatus 1 according to a first embodiment performs an image reading process to read an image of a document 9. For example, the image reading apparatus 1 may be a portion of an image processing apparatus such as a copying machine, a facsimile apparatus, or a multifunctional device.

An image of the document 9 that is read by the image reading process performed by the image reading apparatus 1 is hereinafter referred to as a read image.

### Configuration of Image Reading Apparatus 1

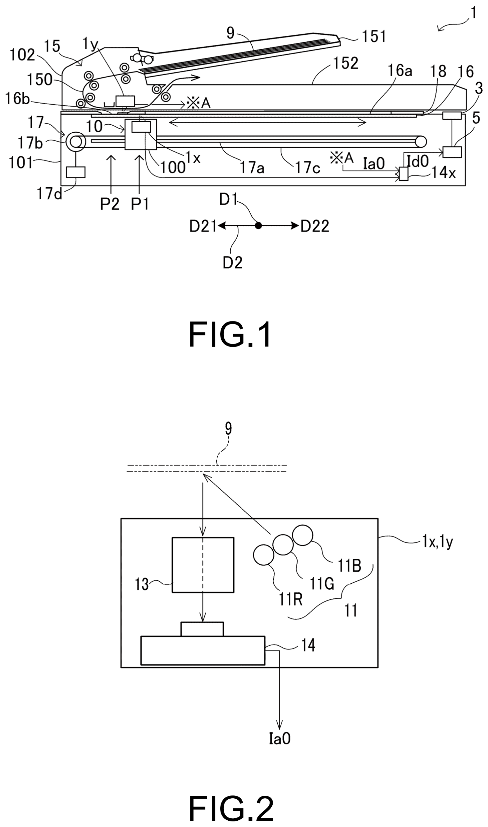

In the present embodiment, the image reading apparatus 1 includes, for example, a body 101, a document cover 102, a scanning unit 10, an analog front end (AFE) 14x, a document transportation apparatus 15, a platen glass portion 16a, a contact glass portion 16b, and a unit driving apparatus 17 (refer to Fig. 1).

The image reading apparatus 1 further includes a user interface apparatus 3 and a control apparatus 5.

A longitudinal direction of the scanning unit 10 is a primary scanning direction D1. The scanning unit 10 includes a first contact image sensor unit (CIS unit) 1x, and a carriage 100 that supports the first CIS unit 1x.

In Fig. 1, a depth direction when the figure is viewed is the primary scanning direction D1, and a right-and-left direction when the figure is viewed is a secondary scanning direction D2. The secondary scanning direction D2 is a direction that intersects the primary scanning direction D1. In the present embodiment, the secondary scanning direction D2 is a direction orthogonal to the primary scanning direction D1.

In Figs. 1, 5, and 6, a first direction D21 corresponds to one of orientations in the secondary scanning direction D2, and a second direction D22 corresponds another of the orientations in the secondary scanning direction D2. In other words, the second direction D22 is a direction opposite to the first direction D21.

The body 101 is a housing that accommodates therein the scanning unit 10 and the unit driving apparatus 17. The platen glass portion 16a and the contact glass portion 16b form a portion of an upper surface of the body 101.

Each of the platen glass portion 16a and the contact glass portion 16b is in the form of a transparent plate. The platen glass portion 16a is a portion on which the document 9 is placed. The platen glass portion 16a is an example of a platen plate portion.

The contact glass portion 16b is arranged on a side of the platen glass portion 16a in the first direction D21. The contact glass portion 16b is an example of a contact plate portion.

In the present embodiment, a single transparent glass plate 16 includes the platen glass portion 16a and the contact glass portion 16b (refer to Figs. 1, 5, and 6). The body 101 includes a glass cover member 18 that is arranged to overlap an upper surface of the glass plate 16. The glass cover member 18 is a synthetic resin member.

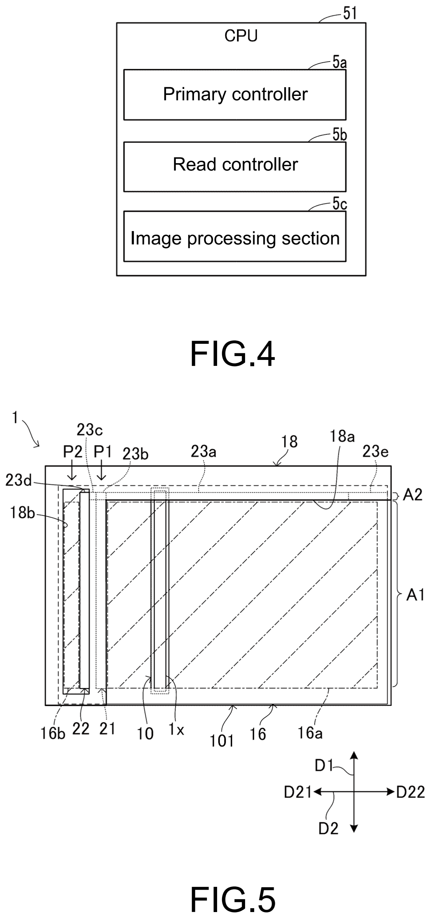

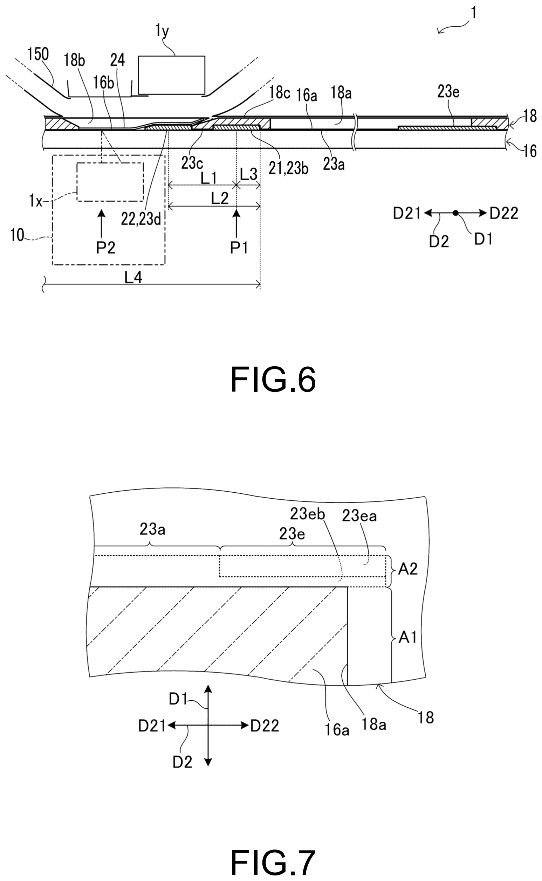

A first opening 18a and a second opening 18b are formed in the glass cover member 18 (refer to Figs. 5 and 6). A portion of the glass plate 16 that includes the platen glass portion 16a is exposed through the first opening 18a. Another portion of the glass plate 16 that includes the contact glass portion 16b is exposed through the second opening 18b.

In the example illustrated in Fig. 5, the first opening 18a is a notch portion that is formed by the body 101 being cut inward from a front side of the body 101 and a lateral side of the body 101 in the second direction D2. This makes it possible to easily take up the document 9 situated on the platen glass portion 16a by sliding the document 9 toward the front side or the lateral side from the platen glass portion 16a. The first opening 18a is a rectangle-shaped hole.

Note that the first opening 18a may be a notch portion that is formed by the body 101 being rectangularly cut inward from the front side. In this case, the document 9 situated on the platen glass portion 16a can be taken up by being slid toward the front side from the platen glass portion 16a.

The scanning unit 10 is supported by the body 101. The scanning unit 10 is supported in a movable region situated across a region under the platen glass portion 16a and a region under the contact glass portion 16b to be movable in the first direction D21 and the second direction D22.

The unit driving apparatus 17 moves the scanning unit 10 in the movable region in the first direction D21 or the second direction D22. The unit driving apparatus 17 includes a unit support portion 17a, a motor 17b, a power transmission mechanism 17c, and a motor drive circuit 17d.

The unit support portion 17a supports the scanning unit 10 such that the scanning unit 10 is movable in the secondary scanning direction D2. The motor 17b is a drive source of a mechanism that moves the scanning unit 10. The power transmission mechanism 17c converts a rotational force of the motor 17b into a force in the secondary scanning direction D2 to transmit the force to the scanning unit 10.

The scanning unit 10 is moved in the first direction D21 by the motor 17b being rotated in a first rotation direction. The scanning unit 10 is moved in the second direction D22 by the motor 17b being rotated in a second rotation direction.

The motor drive circuit 17d rotates the motor 17b according to control instructions given by the control apparatus 5. The control apparatus 5 outputs the control instructions to operate the unit driving apparatus 17.

The document cover 102 is supported to be movable between a closed position and an open position. The document cover 102 in the closed position covers upper surfaces of the platen glass portion 16a and the contact glass portion 16b. The document cover 102 in the open position exposes the upper surfaces of the platen glass portion 16a and the contact glass portion 16b.

The image reading apparatus 1 can perform a stationary document reading process. In the stationary document reading process, the scanning unit 10 is moved along the platen glass portion 16a, and the first CIS unit 1x reads an image on a lower side of the document 9 placed on the platen glass portion 16a.

The document transportation apparatus 15 is provided to the document cover 102. The document transportation apparatus 15 feeds the document 9 placed on a feeding tray 151 to the transportation path 150. Further, the document transportation apparatus 15 transports the document 9 along the transportation path 150 passing on the upper surface of the contact glass portion 16b. Furthermore, the document transportation apparatus 15 carries the document 9 out of the transportation path 150 onto a discharge tray 152.

The image reading apparatus 1 can perform a transported document reading process in a state in which the document cover 102 is closed. In the transported document reading process, the unit driving apparatus 17 holds the scanning unit 10 under the contact glass portion 16b, and the document transportation apparatus 15 transports the document 9 along the transportation path 150. Further, the first CIS unit 1x reads an image on the lower side of the document 9 passing on the contact glass portion 16b.

The image reading apparatus 1 further includes a second CIS unit 1y that is provided to the document cover 102. The second CIS unit 1y is arranged to face a portion of the transportation path 150 that is situated along the body 101.

In the transported document reading process, the second CIS unit 1y reads an image on an upper side of the document 9 passing on the contact glass portion 16b.

As illustrated in Fig. 2, each of the first CIS unit 1x and the second CIS unit 1y includes a light emitter 11, a lens 13, and an image sensor 14.

The light emitter 11, the lens 13, and the image sensor 14 are arranged in the primary scanning direction D1. A longitudinal direction of each of the light emitter 11, the lens 13, and the image sensor 14 is the primary scanning direction D1.

The light emitter 11 emits light. The light emitter 11 of the first CIS unit 1x emits light upward. The light emitter 11 of the second CIS unit 1y emits light downward.

The light emitted by the light emitter 11 is reflected off the document 9. For example, the light emitter 11 includes a light source, and a light guiding member arranged in the primary scanning direction D1. While guiding, in the primary scanning direction D1, light emitted by the light source and incident on an end of the light guiding member, the light guiding member emits the light in a direction that intersects the primary scanning direction D1. For example, the light guiding member is a synthetic resin member.

The lens 13 is a condenser that guides, to the image sensor 14, reflected light of the light emitted by the light emitter 11. The reflected light is light diffusely reflected off the document 9. Further, the reflected light may be light diffusely reflected off a first white base portion 21, a second white base portion 22, a first reference portion 23a, a second reference portion 23b, a third reference portion 23c, or a fourth reference portion 23d. Those will be described later.

The image sensor 14 receives the reflected light, and detects a light amount of the reflected light. Further, the image sensor 14 outputs, to the AFE 14x, a line image signal la0 that represents a result of the detection of the light amount of the reflected light.

In the present embodiment, the image sensor 14 is a CMOS-type line sensor. The lens 13 is an example of a light guiding section that guides the reflected light to the image sensor 14.

The image sensor 14 of the first CIS unit 1x is an example of a primary image sensor. The image sensor 14 of the second CIS unit 1y is an example of a secondary image sensor.

The AFE 14x converts an analog line image signal la0 into digital line image data Id0, and outputs the line image data Id0 to the control apparatus 5. The line image data Id0 includes a plurality of pieces of pixel data for a single line in the primary scanning direction D1.

The line image data Id0 for a plurality of lines, which corresponds to a single page of the document 9, is data for the read image that corresponds to the single page of the document 9.

The image sensor 14 reads an image of the document 9 in the form of a color image. Thus, data for the read image is color-image data that represents light amounts of the pieces of reflected light of three colors that are red, green, and blue.

In the present embodiment, the light emitter 11 includes a red light emitter 11R, a green light emitter 11G, and a blue light emitter 11B that respectively emit red light, green light, and blue light. Further, the pieces of line image data Id0 for three colors, which are obtained when the red light emitter 11R, the green light emitter 11G, and the blue light emitter 11B emit pieces of light successively, make up the data for the read image.

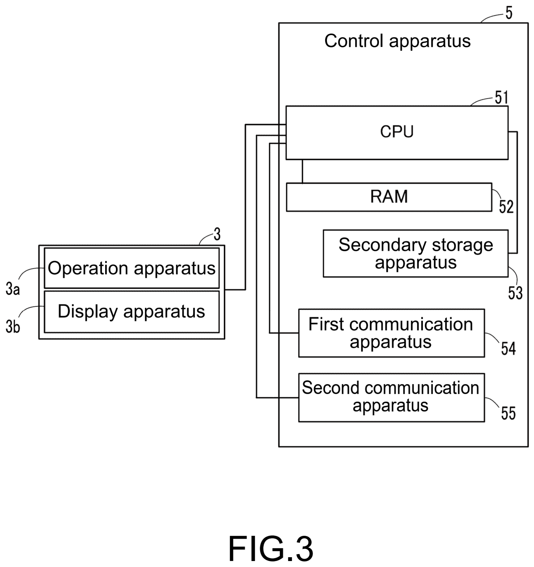

As illustrated in Fig. 3, the user interface apparatus 3 includes an operation apparatus 3a and a display apparatus 3b. The operation apparatus 3a is an apparatus that receives operations performed by humans, and includes, for example, an operation button and a touchscreen.

The display apparatus 3b includes a display panel such as a liquid crystal panel that can display thereon images and other information. Note that the operations performed by humans include not only operations performed with human hands but also operations performed with human voice or lines of sight of humans.

The control apparatus 5 includes, for example, a central processing unit (CPU) 51, a RAM 52, a secondary storage apparatus 53, a first communication apparatus 54, and a second communication apparatus 55.

The secondary storage apparatus 53 is a computer-readable nonvolatile storage apparatus. The secondary storage apparatus 53 can store therein a computer program and various data. For example, one of a solid state drive (SSD) and a hard disk drive or both of them are adopted as the secondary storage apparatuses 53.

The CPU 51 is a processor that performs various data processes and controls by executing a computer program stored in the secondary storage apparatus 53. Note that another processor such as a DSP may perform the data processes and controls instead of the CPU 51.

The RAM 52 is a computer-readable volatile storage apparatus. The RAM 52 is accessed by the CPU 51. The RAM 52 serves as a primary storage that stores therein data on which processing is to be performed by the CPU 51, and data generated by the CPU 51. The RAM 52 accesses data at a higher speed than the secondary storage apparatus 53.

Through a network such as a local area network (LAN), the CPU 51 can communicate with a host apparatus (not illustrated) that is an external apparatus. The host apparatus is a computer that can communicate with the image reading apparatus 1.

The first communication apparatus 54 is an interface apparatus that relays signal transmission or data communication performed between the CPU 51 and another apparatus included in the image reading apparatus 1. For example, the CPU 51 transmits control instructions to the motor drive circuit 17d through the first communication apparatus 54. Further, the CPU 51 acquires the line image data Id0 from the AFE 14x through the first communication apparatus 54.

The second communication apparatus 55 is a communication interface device that performs communication with the host apparatus through the network. The CPU 51 performs all of data transmission to and all of data reception from the host apparatus through the second communication apparatus 55.

For example, the CPU 51 transmits data for the read image obtained by the image reading process to the host apparatus through the second communication apparatus 55.

The CPU 51 includes a plurality of processing modules implemented by the computer program being executed. Examples of the plurality of processing modules include a primary controller 5a, a read controller 5b, and an image processing section 5c (refer to Fig. 4).

The primary controller 5a primarily monitors an operation performed on the operation apparatus 3a and data reception performed by the second communication apparatus 55. When the operation or the data reception is detected, the primary controller 5a controls start of a process corresponding to details of the detection.

The read controller 5b controls the motor drive circuit 17d and the first CIS unit 1x to cause the image reading apparatus 1 to perform the stationary document reading process. Further, the read controller 5b controls the document transportation apparatus 15, the first CIS unit 1x, and the second CIS unit 1y to cause the image reading apparatus 1 to perform the transported document reading process.

The image processing section 5c performs various processes on the line image data Id0 obtained by the stationary document reading process or the transported document reading process. The image processing section 5c is an example of a data processing section that performs processing on the line image data Id0 including a plurality of pieces of pixel data and corresponding to the line image signal la0.

The read controller 5b controls the first CIS unit 1x and the motor drive circuit 17d to move the scanning unit 10 to a home position P1 determined in advance. The home position P1 is an initial position of the scanning unit 10, and is a position situated on the side of the platen glass portion 16a in the first direction D21.

In the stationary document reading process, the read controller 5b moves, in the second direction D22, the scanning unit 10 from the home position P1 to an end position in a read range (refer to Figs. 1, 5, and 6).

The read controller 5b causes the first CIS unit 1x to start performing the image reading process when the scanning unit 10 has been moved a preparation distance determined in advance from the home position P1.

The preparation distance is a distance from the home position P1 to a position that corresponds to an end of the document 9 placed on the platen glass portion 16a. A movement speed of the scanning unit 10 becomes stable during the movement of the scanning unit 10 from the home position P1 by the preparation distance.

Further, the read controller 5b moves the scanning unit 10 from the end position to the home position P1 in the first direction D21.

In the transported document reading process, the read controller 5b moves the scanning unit 10 from the home position P1 to a read position P2 situated below the contact glass portion 16b, and thereafter, the read controller 5b keeps the scanning unit 1 stationary at the read position P2 (refer to Figs. 1, 5, and 6).

The image reading apparatus 1 further includes the first and second white base portions 21 and 22 each arranged in the primary scanning direction D1 (refer to Figs. 5 and 6). The first white base portion 21 includes a white lower surface, and the second white base portion 22 includes a white upper surface. For example, each of the first white base portion 21 and the second white base portion 22 is a synthetic resin sheet or plate.

The first white base portion 21 is arranged on the side of the platen glass portion 16a in the first direction D21. The first white base portion 21 is arranged in a lower surface of a portion of the glass cover member 18 on a side of the first opening 18a in the first direction D21 (refer to Fig. 6).

Specifically, the first white base portion 21 is arranged in the lower surface of the portion of the glass cover member 18 between the first opening 18a and the second opening 18b (refer to Fig. 6). In other words, the first white base portion 21 is arranged in a region between the platen glass portion 16a and the contact glass portion 16b in the secondary scanning direction D2.

The second white base portion 22 is arranged in a region within the second opening 18b of the glass cover member 18 on the upper surface of the glass plate 16 to be adjacent to the contact glass portion 16b in the second direction D22 (refer to Fig. 6). In other words, the second white base portion 22 is arranged in a region between the platen glass portion 16a and the contact glass portion 16b in the secondary scanning direction D2.

In the present embodiment, the second white base portion 22 is spaced from the first white base portion 21 in the first direction D21.

As illustrated in Fig. 6, the body 101 further includes a transparent film 24 that is bonded to a portion of the upper surface of the body 101. The transparent film 24 covers the upper surface of the contact glass portion 16b and the upper surface of the second white base portion 22.

The transparent film 24 covers a level-difference portion situated between the upper surface of the contact glass portion 16b and an edge of the second white base portion 22 to form an inclined surface. As a result, the transparent film 24 prevents the document 9 transported by the document transportation apparatus 15 from getting caught on the level-difference portion.

The home position P1 is a position situated below the first white base portion 21 (refer to Fig. 6). The second CIS unit 1y is arranged to face the upper surface of the second white base portion 22 (refer to Fig. 6).

Each of the lower surface of the first white base portion 21 and the upper surface of the second white base portion 22 is a uniform-white-color surface having high diffuse reflectance.

The image processing section 5c performs shading correction on the first CIS unit 1x using the line image data Id0 obtained by the first CIS unit 1x when the scanning unit 10 is at the home position P1. The shading correction is a process performed to set correction coefficients for the line image data Id0.

Further, the image processing section 5c performs shading correction on the second CIS unit 1y using the line image data Id0 obtained by the second CIS unit 1y when the document 9 is not being transported.

As a reference example, it is conceivable that a mark that represents the home position P1 could be formed in the first white base portion 21. In the reference example, the image processing section 5c can detect, by detecting the mark in the line image data Id0, that the scanning unit 10 has arrived at the home position P1.

A certain period of time is necessary to perform a mark detecting process to detect a specific mark in the line image data Id0. Thus, when the unit driving apparatus 17 performs a process of moving the scanning unit 10 as necessary according to a result of the mark detecting process, a relatively long period of time is necessary to determine a position of the scanning unit 10.

However, it is desirable that the scanning unit 10 be positioned at the home position P1 promptly.

Further, it is also desirable that the unit driving apparatus 17 move the scanning unit 10 to the home position P1 without the scanning unit 10 colliding with an end of the movable region. Furthermore, it is also desirable that the scanning unit 10 also be moved to the home position P1 without malfunction when the document 9 or an extraneous material is placed on the contact glass portion 16b.

On the other hand, it is not desirable that a dedicated sensor that detects an arrival of the scanning unit 10 at the home position P1 be provided, since the number of parts is increased.

Further, the image reading apparatus 1 has a configuration necessary to perform the transported document reading process. In other words, the image reading apparatus 1 includes the contact glass portion 16b and the document transportation apparatus 15. As described above, the document transportation apparatus 15 transports the document 9 along the transportation path 150 passing on the upper surface of the contact glass portion 16b.

When the transported document reading process is performed, the unit driving apparatus 17 positions the scanning unit 10 at the read position P2 situated below the contact glass portion 16b, and the document transportation apparatus 15 transports the document 9. The image sensor 14 of the first CIS unit 1x reads an image of the document 9 passing on the contact glass portion 16b.

When the scanning unit 10 is situated below the platen glass portion 16a or the contact glass portion 16b, the line image data Id0 is unspecified. It is also desirable that the scanning unit 10 be positioned at the home position P1 promptly when a plurality of positions at which the line image data Id0 is unspecified, as described above, exists in the movable region for the scanning unit 10.

The image reading apparatus 1 has a configuration necessary to position the scanning unit 10 at the home position P1 promptly without the scanning unit 10 colliding with the end of the movable region. Such a configuration is described below.

As illustrated in Figs. 5 and 6, the image reading apparatus 1 includes the first reference portion 23a, the second reference portion 23b, the third reference portion 23c, and the fourth reference portion 23d.

The first reference portion 23a is arranged along a side edge that forms an end of the platen glass portion 16a in the primary scanning direction D1, and includes a lower surface of a first color. In the present embodiment, the first color is black.

The second reference portion 23b is arranged between the first reference portion 23a and the contact glass portion 16b to be adjacent to the first reference portion 23a in the first direction D21. The second reference portion 23b includes a lower surface of a second color different from the first color. In the present embodiment, the second color is white.

Note that the first color may be a color other than black. Likewise, the second color may be a color other than white. For example, the first color may be a black- or brown-type dark color with a low reflectance of light, and the second color may be a white- or yellow-type light color with a high reflectance of light.

The third reference portion 23c is arranged between the second reference portion 23b and the contact glass portion 16b to be adjacent to the second reference portion 23b in the first direction D21. The third reference portion 23c includes a lower surface of the first color. In the present embodiment, the color of the lower surface of the third reference portion 23c is black.

The fourth reference portion 23d is arranged between the third reference portion 23c and the contact glass portion 16b to be adjacent to the third reference portion 23c in the first direction D21. The fourth reference portion 23d includes a lower surface of the second color. In the present embodiment, the color of the lower surface of the fourth reference portion 23d is white.

In the present embodiment, the first white base portion 21 includes the second reference portion 23b. In other words, one of end portions of the first white base portion 21 in the primary scanning direction D1 is the second reference portion 23b. Likewise, the second white base portion 22 includes the fourth reference portion 23d. In other words, one of end portions of the second white base portion 22 in the primary scanning direction D1 is the fourth reference portion 23d. The second white base portion 22 includes upper and lower surfaces in white.

The image reading apparatus 1 further includes an end reference portion 23e (refer to Figs. 5 and 6). The end reference portion 23e is arranged in an end region of the movable region in the second direction D22 to be adjacent to the first reference portion 23a in the second direction D22.

A length of the end reference portion 23e in the secondary scanning direction D2 is greater than or equal to a distance L4 from an end of the movable region in the first direction D21 to an end of the first reference portion 23a in the first direction D21 (refer to Fig. 6).

The end reference portion 23e includes a lower surface including surfaces of two specific colors that are aligned in the primary scanning direction D1. In other words, the lower surface of the end reference portion 23e includes a first specific surface 23ea of a first specific color and a second specific surface 23eb of a second specific color (refer to Fig. 7).

In the example illustrated in Fig. 7, the first specific surface 23ea is a surface situated more distant from the platen glass portion 16a than the second specific surface 23eb. However, in the primary scanning direction D1, the first specific surface 23ea and the second specific surface 23eb may be arranged in reverse order to the arrangement in the example illustrated in Fig. 7.

The first specific color corresponding to the color of the first specific surface 23ea is different from the first color and the second color. For example, the first specific color is red, green, blue, yellow, magenta, or cyan.

On the other hand, it is only required that the second specific color corresponding to the color of the second specific surface 23eb be a color different from the first specific color. For example, the second specific color is the same as the first color corresponding to the color of the lower surface of the first reference portion 23a. In the present embodiment, the second specific color is black.

A region occupied by the platen glass portion 16a in the primary scanning direction D1 is hereinafter referred to as a target region A1 (refer to Fig. 5). Further, a region adjacent to an end of the target region A1 in the primary scanning direction D1 is hereinafter referred to as a reference region A2 (refer to Fig. 5).

Primarily, the target region A1 is a region in which an image of the document 9 is read. The reference region A2 is a region occupied by the first reference portion 23a, the second reference portion 23b, the third reference portion 23c, the fourth reference portion 23d, and the end reference portion 23e in the primary scanning direction D1.

The contact glass portion 16b is arranged across the target region A1 and the reference region A2 in the primary scanning direction D1 (refer to Fig. 5). Likewise, the first white base portion 21 and the second white base portion 22 are each formed across the read-target region A1 and the reference region A2 in the primary scanning direction D1.

A region occupied by the platen glass portion 16a and the contact glass portion 16b in the primary scanning direction D1 includes the read-target region A1 (refer to Fig. 5). The first reference portion 23a, the second reference portion 23b, the third reference portion 23c, the fourth reference portion 23d, and the end reference portion 23e are arranged in the reference region A2.

In the present embodiment, a portion of an edge portion of the first opening 18a of the glass cover member 18 is the first reference portion 23a (refer to Fig. 5). The first reference portion 23a is formed along an end of the first opening 18a in the primary scanning direction D1.

Further, a portion of an edge portion of the second opening 18b of the glass cover member 18 is the third reference portion 23c (refer to Fig. 5). The third reference portion 23c is formed along an end of the second opening 18b in the second direction D22.

Thus, at least the first reference portion 23a and the third reference portion 23c in the glass cover member 18 each have a lower surface in black. For example, the entire lower surface of the glass cover member 18 is black.

For example, the first specific surface 23ea of the end reference portion 23e is provided by an additional member of the first specific color being bonded to a portion of the reference region A2 on the lower surface of the glass cover member 18 (refer to Fig. 6). The additional member is a synthetic resin sheet or plate.

In the present embodiment, the second specific surface 23eb of the end reference portion 23e is a portion that is included in the reference region A2 on the lower surface of the glass cover member 18 and in which the additional member is not situated.

### Home Positioning Control

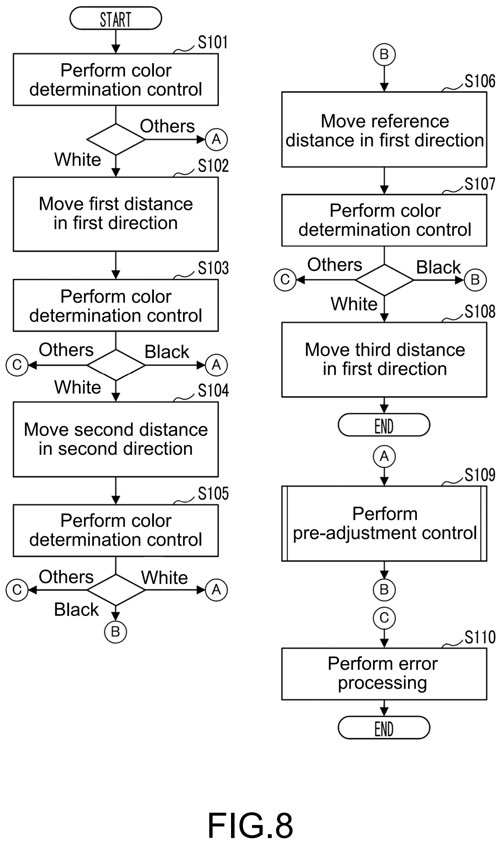

Next, an example of a procedure of home positioning control is described with reference to a flowchart in Fig. 8.

The home positioning control is performed to position the scanning unit 10 at the home position P1. The read controller 5b starts performing the home positioning control when the image reading apparatus 1 is started.

In the following description, S101, S102, ... respectively represent identification symbols for a plurality of steps in the home positioning control. In the home positioning control, the read controller 5b first starts the process of Step S101.

### Step S101

In Step S101, the read controller 5b performs color determination control.

The color determination control includes causing the first CIS unit 1x to perform a line image reading process and causing the image processing section 5c to perform a color determination process.

In the line image reading process, the read controller 5b causes the light emitter 11 to emit light, and operates the image sensor 14. For example, the read controller 5b causes the red light emitter 11R, the green light emitter 11G, and the blue light emitter 11B to emit pieces of light one by one in the line image reading process.

In the color determination process, the image processing section 5c determines whether reference pixel data included in the line image data Id0 obtained by the line image reading process is data for black, data for white, or data for two specific colors. The reference pixel data is a plurality of pieces of pixel data being included in the line image data Id0 and corresponding to the reference region A2.

The reference region A2 is a region that corresponds to the first reference portion 23a, the second reference portion 23b, the third reference portion 23c, the fourth reference portion 23d, or the end reference portion 23e in the primary scanning direction D1 (refer to Figs. 5 and 7).

Here, the reference pixel data corresponding to light emission performed by the red light emitter 11R is referred to as red reference data, the reference pixel data corresponding to light emission performed by the green light emitter 11G is referred to as green reference data, and the reference pixel data corresponding to light emission performed by the blue light emitter 11B is referred to as blue reference data.

Further, data, from among the reference pixel data, that corresponds to a region occupied by the first specific surface 23ea in the primary scanning direction D1 is referred to as first reference region data. Likewise, data, from among the reference pixel data, that corresponds to a region occupied by the second specific surface 23eb in the primary scanning direction D1 is referred to as second reference region data.

When the first specific color is red, green, blue, yellow, magenta, or cyan, the image processing section 5c performs a binarization process on the reference pixel data with respect to the red reference data, the green reference data, and the blue reference data.

Further, the image processing section 5c determines a color of the first reference region data on the basis of three first binary values for the first reference region data that are obtained by the binarization process. Likewise, the image processing section 5c determines a color of the second reference region data on the basis of three second binary values for the second reference region data that are obtained by the binarization process.

For example, the case in which the first specific color is red, green, or blue is discussed. When only one of the three first binary values that corresponds to the first specific color is a high value, the image processing section 5c determines that the first reference region data is data for the first specific color.

Further, when one of the three binary values that corresponds to one of two colors other than the first specific color is a high value, the image processing section 5c determines that the reference pixel data is the data for white.

Furthermore, when one of the three first binary values that corresponds to one of the two colors other than the first specific color is a low value, the image processing section 5c determines that the first reference region data is the data for black.

Two colors, from among three primary colors of red, green, and blue, that are included in yellow, magenta, or cyan are hereinafter referred to as two constituent colors.

The case in which the first specific color is yellow, magenta, or cyan is discussed. When only two of the three first binary values that correspond to the two constituent colors are high values, the image processing section 5c determines that the first reference region data is the data for the first specific color.

Further, when one of the three first binary values that corresponds to a color other than the two constituent colors is a large value, the image processing section 5c determines that the first reference region data is the data for white.

Furthermore, when one of the three first binary values that corresponds to a color other than the two constituent colors is a low value, the image processing section 5c determines that the first reference region data is the data for black.

In the present embodiment, when a result of the color determination on the first reference region data is white or black, the image processing section 5c determines that the reference pixel data is data for a color determined for the first reference region data.

On the other hand, when the result of the color determination on the first reference region data is the first specific color, the image processing section 5c determines the color for the second reference region data, as in the case of the first reference region data.

When the first reference region data is determined to be the data for the first specific color and when the second reference region data is determined to be data for the second specific color, the image processing section 5c determines that the reference pixel data is the data for the two specific colors.

Further, when the reference pixel data is not the data for white, the data for black, or the data for the two specific colors, the image processing section 5c determines that the reference pixel data is data for an exceptional color.

As described above, when the first specific color is red, green, blue, yellow, magenta, or cyan, the color determination process is performed by performing the binarization process and the binary value determining process.

When a result of the color determination process is white, the read controller 5b performs the process of Step S102. On the other hand, when the result of the color determination process is black, the two specific colors, or the exceptional color, the read controller 5b performs the process of Step S109.

### Step S102

In Step S102, the read controller 5b causes the unit driving apparatus 17 to perform operation to move the scanning unit 10 a first distance in the first direction D21. The first distance is an example of a first check distance.

The first distance is a distance in the secondary scanning direction D2 from the home position P1 to a position inside of a region of the fourth reference portion 23d. For example, the first distance is a distance L1 from the home position P1 to a center line that passes through a midpoint of the fourth reference portion 23d in the secondary scanning direction D2 (refer to Fig. 6).

The operation performed by the unit driving apparatus 17 in Step S102 is hereinafter referred to as a first drive operation. After performing the process of Step S102, the read controller 5b performs the process of Step S103.

### Step S103

In Step S103, the read controller 5b performs the color determination control when the scanning unit 10 is stopped at a position at which the scanning unit 10 has arrived due to the first drive operation.

When a result of the color determination process is white, the read controller 5b performs the process of Step S104. When the result of the color determination process is black, the read controller 5b performs the process of Step S109.

On the other hand, when the result of the color determination process is the two specific colors or the exceptional color, the read controller 5b performs the process of Step S110.

### Step S104

In Step S104, the read controller 5b causes the unit driving apparatus 17 to perform operation to move the scanning unit 10 a second distance in the second direction D22.

The second distance is a distance in the secondary scanning direction D2 from a position inside of the region of the fourth reference portion 23d to a position inside of a region of the first reference portion 23a. The second distance is larger than the first distance.

For example, the second distance is a distance obtained by adding a very small extra length to a distance L2 from the center line passing through the midpoint of the fourth reference portion 23d in the secondary scanning direction D2 to the end of the first reference portion 23a in the first direction D21 (refer to Fig. 6).

The operation performed by the unit driving apparatus 17 in Step S104 is hereinafter referred to as a second drive operation. After performing the process of Step S104, the read controller 5b performs the process of Step S105.

It is often the case that the scanning unit 10 is at the home position P1 when the image reading apparatus 1 is started.

When the scanning unit 10 is at the home position P1 at the time of starting the home positioning control, the scanning unit 10 arrives at a pre-adjustment position by the processes of Steps S101 to S104 being performed. The pre-adjustment position is a position of the scanning unit 10 when the scanning unit 10 faces a portion of the first reference portion 23a that is situated near the end of the first reference portion 23a in the first direction D21.

Thus, it is often the case that the scanning unit 10 is moved to the pre-adjustment position by being moved twice.

### Step S105

In Step S105, the read controller 5b performs the color determination control when the scanning unit 10 is stopped at a position at which the scanning unit 10 has arrived due to the second drive operation.

When a result of the color determination process is black, the read controller 5b performs the process of Step S106. When the result of the color determination process is white, the read controller 5b performs the process of Step S109.

On the other hand, when the result of the color determination process is the two specific colors or the exceptional color, the read controller 5b performs the process of Step S110.

When the scanning unit 10 is at the home position P1 at the time of starting the home positioning control, the processes of Steps S101 to S105 are performed.

### Step S106

In Step S106, the read controller 5b causes the unit driving apparatus 17 to perform operation to move the scanning unit 10 a reference distance in the first direction D21.

The reference distance is a distance smaller than the first distance and smaller than the second distance. The reference distance is set in advance according to a degree of accuracy necessary to position the scanning unit 10 at the home position P1. Thus, the reference distance is a very small distance.

The operation performed by the unit driving apparatus 17 in Step S106 is hereinafter referred to as a third drive operation. After performing the process of Step S106, the read controller 5b performs the process of Step S107.

### Step S107

In Step S107, the read controller 5b performs the color determination control when the scanning unit 10 is stopped at a position at which the scanning unit 10 has arrived due to the third drive operation.

When a result of the color determination process is white, the read controller 5b performs the process of Step S108. When the result of the color determination process is black, the read controller 5b performs the processes of Steps S106 and S107 again.

In other words, until the reference pixel data is determined to be the data for white, the unit driving apparatus 17 performs at least once the third drive operation to move the scanning unit 10 the reference distance in the first direction D21 (refer to Steps S106 and S107).

The third drive operation performed at least once results in moving the scanning unit 10 to a position at which the scanning unit 10 faces an end of the second reference portion 23b in the second direction D22.

On the other hand, when the result of the color determination process is the two specific colors or the exceptional color, the read controller 5b performs the process of Step S110.

### Step S108

In Step S108, the read controller 5b causes the unit driving apparatus 17 to perform operation to move the scanning unit 10 a third distance in the first direction D21.

The third distance is a distance L3 in the secondary scanning direction D2 from the end of the second reference portion 23b in the second direction D22 to the home position P1 (refer to Fig. 6). The third distance is smaller than the first distance, smaller than the second distance, and larger than the reference distance.

The operation performed by the unit driving apparatus 17 in Step S108 is hereinafter referred to as a completion drive operation. The completion drive operation is performed when the reference pixel data is determined to be the data for white after the third drive operation is performed. The third distance is an example of a final adjustment distance.

The unit driving apparatus 17 performs the completion drive operation to position the scanning unit 10 at the home position P1. An error in determining the position of the scanning unit 10 substantially corresponds to the reference distance. After performing the process of Step S108, the read controller 5b terminates the home positioning control.

### Step S109

In Step S109, the read controller 5b performs pre-adjustment control described later. The pre-adjustment control is a process performed to move the scanning unit 10 to the pre-adjustment position.

After performing the pre-adjustment control, the read controller 5b performs the processes of Steps S106 to S108.

Before the third drive operation in Step S106 is started, the scanning unit 10 arrives at the pre-adjustment position by the processes of Steps S101 to S105 being performed or by the process of Step S109 being performed. The pre-adjustment position is a position situated close to a boundary of the first reference portion 23a and the second reference portion 23b.

Thus, the unit driving apparatus 17 can position the scanning unit 10 at the home position P1 only by performing the third drive operation a relatively small number of times and performing the completion drive operation once.

### Step S110

In Step S110, the read controller 5b performs error processing determined in advance. For example, the error processing includes a process of outputting an error message to the display apparatus 3b.

After performing the process of Step S110, the read controller 5b forcibly terminates the home positioning control. In this case, the termination is performed without completion of the determination of the position of the scanning unit 10.

### Pre-adjustment Control

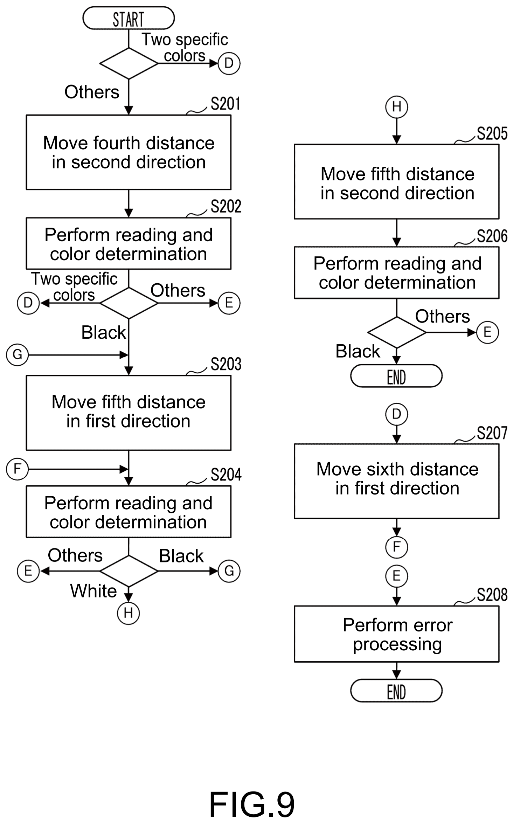

Next, an example of a procedure of the pre-adjustment control is described with reference to a flowchart in Fig. 9.

In the following description, S201, S202, ... respectively represent identification symbols for a plurality of steps upon performing the pre-adjustment control.

In the pre-adjustment control, the read controller 5b first performs the process of Step S201 when a determination result obtained by the color determination control performed just before the pre-adjustment control is white, black, or the exceptional color. On the other hand, in the pre-adjustment control, the read controller 5b first performs the process of Step S207 when the determination result obtained by the color determination control performed just before the pre-adjustment control is the two specific colors.

The color determination control performed just before the pre-adjustment control is the process of Step S101, S103, or S105 (refer to Fig. 8).

### Step S201

In Step S201, the read controller 5b causes the unit driving apparatus 17 to perform operation to move the scanning unit 10 a fourth distance in the second direction D22.

The fourth distance is a distance that is set such that the scanning unit 10 is moved with certainty from a position situated on a side of the first reference portion 23a in the first direction D1 to a position at which the scanning unit 10 faces the first reference portion 23a. The fourth distance is larger than the distance L4 from the end of the movable region in the first direction D21 to the end of the first reference portion 23a in the first direction D21 (refer to Fig. 6).

The fourth distance is less than or equal to the length of the end reference portion 23e in the secondary scanning direction D2. In other words, the length of the end reference portion 23e in the secondary scanning direction D2 is greater than or equal to the fourth distance.

The operation performed by the unit driving apparatus 17 in Step S201 is hereinafter referred to as a fourth drive operation. After performing the process of Step S201, the read controller 5b performs the process of Step S202.

### Step S202

In Step S202, the read controller 5b performs the color determination control when the scanning unit 10 is stopped at a position at which the scanning unit 10 has arrived due to the fourth drive operation.

When a result of the color determination process is black, the read controller 5b performs the process of Step S203. When the result of the color determination process is white or the exceptional color, the read controller 5b performs the process of Step S208.

Further, when the result of the color determination process is the two specific colors, the read controller 5b performs the process of Step S207.

### Step S203

In Step S203, the read controller 5b causes the unit driving apparatus 17 to perform operation to move the scanning unit 10 a fifth distance in the first direction D21.

The fifth distance is smaller than a width of the second reference portion 23b in the secondary scanning direction D2 and larger than the reference distance.

The operation performed by the unit driving apparatus 17 in Step S203 is hereinafter referred to as a fifth drive operation. After performing the process of Step S203, the read controller 5b performs the process of Step S204.

The process of Step S204 may be performed subsequently to a seventh drive operation in Step 207 described later.

### Step S204

In Step S204, the read controller 5b performs the color determination control when the scanning unit 10 is stopped at a position at which the scanning unit 10 has arrived due to the fifth or seventh drive operation.

When a result of the color determination process is white, the read controller 5b performs the process of Step S205. When the result of the color determination process is black, the read controller 5b performs the processes of Steps S203 and S204 again.

On the other hand, when the result of the color determination process is the two specific colors or the exceptional color, the read controller 5b performs the process of Step S208.

### Step S205

In Step S205, the read controller 5b causes the unit driving apparatus 17 to perform operation to move the scanning unit 10 the fifth distance in the second direction D22.

The operation performed by the unit driving apparatus 17 in Step S205 is hereinafter referred to as a sixth drive operation. After performing the process of Step S205, the read controller 5b performs the process of Step S206.

The sixth drive operation performed by the unit driving apparatus 17 results in moving the scanning unit 10 to a position at which the scanning unit 10 faces a portion of the first reference portion 23a that is situated near the end of the first reference portion 23a in the first direction D21.

### Step S206

In Step S206, the read controller 5b performs the color determination control when the scanning unit 10 is stopped at a position at which the scanning unit 10 has arrived due to the sixth drive operation.

When a result of the color determination process is black, the read controller 5b terminates the pre-adjustment control, and performs the processes of and after Step S106 (refer to Fig. 8). When the result of the color determination process is white, the two specific colors, or the exceptional color, the read controller 5b performs the process of Step S208.

### Step S207

In Step S207, the read controller 5b causes the unit driving apparatus 17 to perform operation to move the scanning unit 10 a sixth distance in the first direction D21. The sixth distance is larger than the fourth distance.

For example, the sixth distance is a distance slightly smaller than a distance from an end of the first reference portion 23e in the first direction D21 to the end of the first reference portion 23a in the first direction D21.

The operation performed by the unit driving apparatus 17 in Step S207 is the seventh drive operation. After performing the process of Step S207, the read controller 5b performs the process of Step S204.

### Step S208

In Step S208, the read controller 5b performs error processing determined in advance. For example, the error processing includes a process of outputting an error message to the display apparatus 3b.

After performing the process of Step S207, the read controller 5b forcibly terminates the home positioning control. This results in the processes of and after Step S106 not being performed, and the termination is performed without completion of the determination of the position of the scanning unit 10 (refer to Fig. 8).

The first drive operation in Step S102, the second drive operation in Step S104, the third drive operation in Step S106, and the completion drive operation in Step S108 are examples of a plurality of trial drive operations. Further, the fourth drive operation in Step S201, the fifth drive operation in Step S203, the sixth drive operation in Step S205, and the seventh drive operation in Step S207 are also examples of the plurality of trial drive operations.

The plurality of trial drive operations is a plurality of operations performed by the unit driving apparatus 17, where the scanning unit 10 is moved a different distance or in a different direction in each of the plurality of operations.

In the home positioning control, the unit driving apparatus 17 performs a plurality of drive operations successively selected from the plurality of trial drive operations according to a determination result obtained by the color determination process (refer to Steps S101 to S109 and Steps S201 to S207). Accordingly, the unit driving apparatus 17 positions the scanning unit 10 at the home position P1.

The home position P1 is a position situated on the side of the platen glass portion 16a in the first direction D21. In the present embodiment, the home position P1 is a position situated between the platen glass portion 16a and the contact glass portion 16b in the secondary scanning direction D2.

In the present embodiment, the unit driving apparatus 17 performs the first drive operation when the reference pixel data is determined to be the data for white (refer to Steps S101 and S102). The first drive operation is an example of a first check operation. The first distance in the first drive operation is an example of the first check distance.

Further, when the reference pixel data is determined to be the data for white after the first drive operation is performed, the unit driving apparatus 17 performs the second drive operation (refer to Steps S103 and S104). The second drive operation is an example of a second check operation. The second distance in the second drive operation is an example of a second check distance.

When the scanning unit 10 is at the home position P1 at the time of starting the home positioning control, the scanning unit 10 is moved to the pre-adjustment position by the first and second drive operations being performed.

The unit driving apparatus 17 performs the fourth drive operation when the reference pixel data is determined to be data different from the data for white and the data for the two specific colors (refer to Steps S101, S109, and S201). The fourth drive operation is an example of a first pre-adjustment operation. The fourth distance in the fourth drive operation is an example of a first pre-adjustment distance.

The fourth drive operation is performed when, at the time of starting the home positioning control, the scanning unit 10 is situated at a position at which the scanning unit 10 faces none of the second reference portion 23b, the fourth reference portion 23d, and the end reference portion 23e.

When, at the time of starting the home positioning control, the scanning unit 10 is situated more than the fourth distance away from the end reference portion 23e in the first direction D21, the scanning unit 10 is moved, by the fourth drive operation, to a position at which the scanning unit 10 faces the first reference portion 23a.

The unit driving apparatus 17 performs the seventh drive operation when the reference pixel data is determined to be the data for the two specific colors (refer to Steps S101, S109, and S207). The seventh drive operation is an example of a second pre-adjustment operation. The sixth distance in the seventh drive operation is an example of a second pre-adjustment distance that is larger than the first pre-adjustment distance.

A collision of the scanning unit 10 with the end of the movable region is prevented by determination on the two specific colors being performed and by the seventh drive operation being performed.

When, at the time of starting the home positioning control, the scanning unit 10 is situated at a position at which the scanning unit 10 faces the end reference portion 23e, the scanning unit 10 is moved, by the seventh drive operation, to a position at which the scanning unit 10 faces a portion of the first reference portion 23a that is closer to the second reference portion 23b.

When, at the time of starting the home positioning control, the scanning unit 10 is situated less than the fourth distance away from the end reference portion 23e in the first direction D21, the scanning unit 10 is moved, by the fourth and seventh drive operations, to a position at which the scanning unit 10 faces a portion of the first reference portion 23a that is closer to the second reference portion 23b.

When the reference pixel data is determined to be the data for black after the fourth or seventh drive operation is performed, the unit driving apparatus 17 performs the fifth drive operation at least once until the reference pixel data is determined to be the data for white (refer to Steps S203 and S204).

The fifth drive operation is an example of a first rough adjustment operation. The fifth distance in the fifth drive operation is an example of a rough adjustment distance that is smaller than the first pre-adjustment distance. The scanning unit 10 is moved, by the fifth drive operation performed at least once, to a position at which the scanning unit 10 faces the second reference portion 23b.

When the reference pixel data is determined to be the data for white after the fifth or seventh drive operation is performed, the unit driving apparatus 17 performs the sixth drive operation (refer to Steps S204 and S205).

The sixth drive operation is an example of a second rough adjustment operation. The scanning unit 10 is moved to the pre-adjustment position by the sixth drive operation.

When the reference pixel data is determined to be the data for black after the second drive operation in Step S104 or the sixth drive operation in Step S205 is performed, the unit driving apparatus 17 performs the processes of Steps S106 and S107.

In Steps S106 and S107, the unit driving apparatus 17 performs the third drive operation at least once until the reference pixel data is determined to be the data for white.

The third drive operation is an example of a minor adjustment operation. The reference distance in the third drive operation is an example of a minor adjustment distance that is smaller than the rough adjustment distance.

When the reference pixel data is determined to be the data for white after the third drive operation is performed, the unit driving apparatus 17 performs the completion drive operation (refer to Steps S107 and S108). The scanning unit 10 is positioned at the home position P1 by the completion drive operation being performed.

The adoption of the image reading apparatus 1 enables the scanning unit 1 to be positioned at the home position P1 promptly without colliding with the end of the movable region.

Further, the document 9 in color or a colored extraneous material may be placed on the contact glass portion 16b. When a colored object placed on the contact glass portion 16b is falsely recognized as the end reference portion 23e, the scanning unit 10 may collide with the end of the movable region in the first direction D21.

In the image reading apparatus 1, the end reference portion 23e includes the surfaces of the two specific colors (refer to Fig. 7). On the other hand, a lower side of the colored object placed on the contact glass portion 16b is very unlikely to include the surfaces of the two specific colors.

Thus, the unit driving apparatus 17 can also move the scanning unit 10 to the home position P1 without malfunction when the document 9 in color or a colored extraneous material is placed on the contact glass portion 16b.

### Second Embodiment

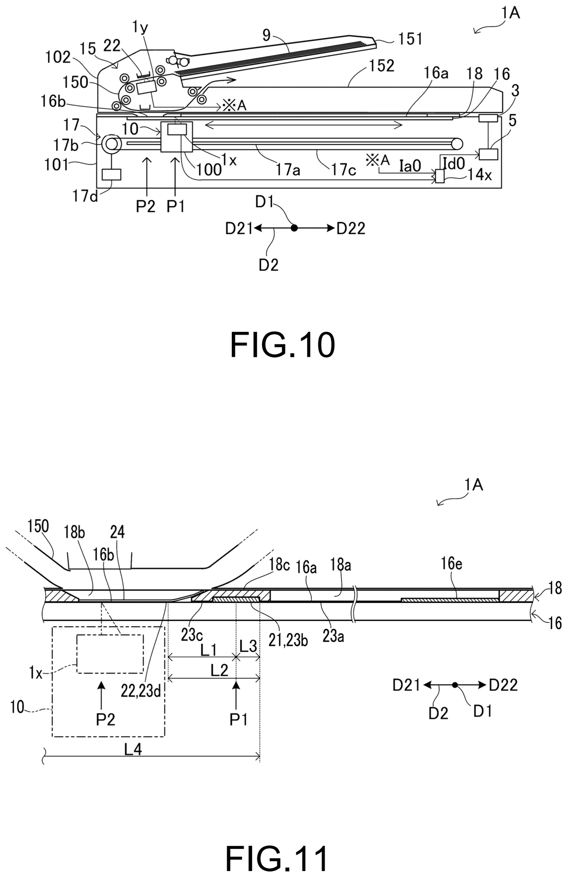

Next, an image reading apparatus 1A according to a second embodiment is described with reference to Figs. 10 to 12. Points on which the image reading apparatus 1A is different from the image reading apparatus 1 are described below.

### Configuration of Image Reading Apparatus 1A

The image reading apparatus 1A has a configuration obtained by removing the fourth reference portion 23d from the image reading apparatus 1 (refer to Fig. 11).

For example, the image reading apparatus 1A has a configuration in which the second CIS unit 1y and the second white base portion 22 are arranged at different positions, compared to the configuration of the image reading apparatus 1 (refer to Fig. 10).

In the example illustrated in Fig. 10, the second CIS unit 1y is arranged to face a portion of the transportation path 150 under the portion. The second white base portion 22 is arranged to face the second CIS unit 1y through the transportation path 150.

In the image reading apparatus 1A, the second white base portion 22 does not include the fourth reference portion 23d situated in the reference region A2.

In the image reading apparatus 1A, the first white base portion 21 is arranged in a lower surface of a portion of the glass cover member 18 on a side of the first opening 18a in the first direction D21 (refer to Fig. 11).

### Home Positioning Control

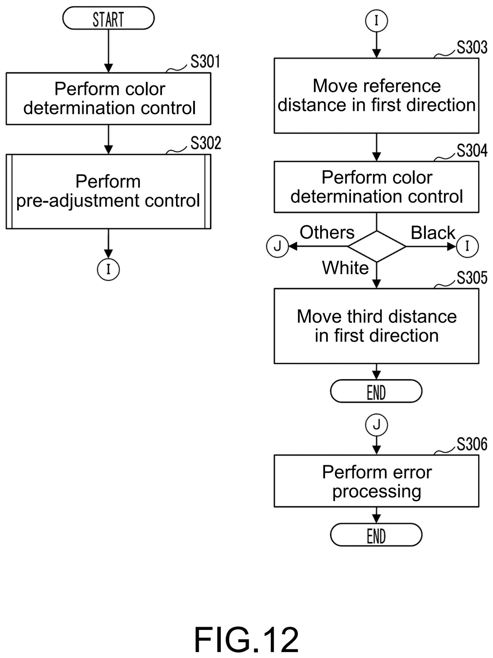

In the present embodiment, the read controller 5b performs, for example, the home positioning control illustrated in Fig. 12 instead of the home positioning control illustrated in Fig. 8. The read controller 5b starts performing the home positioning control when the image reading apparatus 1A is started.

In the following description, S301, S302, ... respectively represent identification symbols for a plurality of steps in the home positioning control performed by the image reading apparatus 1A. In the home positioning control, the read controller 5b first starts the process of Step S301.

### Step S301

In Step S301, the read controller 5b performs the color determination control. Step S301 corresponds to Step S101 in Fig. 8.

After performing the process of Step S301, the read controller 5b performs the process of Step S302. A result of the color determination process in Step S301 is reflected in the process of Step S302.

### Step S302

In Step S302, the read controller 5b performs the pre-adjustment control (refer to Fig. 9). The pre-adjustment control is a process performed to move the scanning unit 10 to the pre-adjustment position.

The result of the color determination process in Step S301 is reflected in the selection of the first process in the pre-adjustment control (refer to Fig. 9).

In other words, the read controller 5b performs the processes of and after Step S201 when the reference pixel data is determined to not be the data for the two specific colors in Step S301 (refer to Fig. 9).

On the other hand, the read controller 5b performs the process of Step S207 when the reference pixel data is determined to be the data for the two specific colors in Step S301 (refer to Fig. 9).

After performing the pre-adjustment control, the read controller 5b performs the processes of Steps S303 to S305.

### Steps S303 to S305

In Steps S303 to S305, the read controller 5b performs processes similar to the processes of Steps S106 to S108 in Fig. 8.

Note that the read controller 5b performs the process of Step S306 when the reference pixel data is determined to be the data for the two specific colors or the data for the exceptional color in Step S304 corresponding to Step S107.

### Step S306

In Step S306, the read controller 5b performs the error processing, as in the case of Step S110 in Fig. 8.

After performing the process of Step S306, the read controller 5b forcibly terminates the home positioning control. In this case, the termination is performed without completion of the determination of the position of the scanning unit 10.

In the present embodiment, the unit driving apparatus 17 performs the fourth drive operation when the reference pixel data is determined to not be the data for the two specific colors (refer to Steps S301, S302, and S201). The fourth drive operation is an example of the first pre-adjustment operation.

Further, the unit driving apparatus 17 performs the seventh drive operation when the reference pixel data is determined to be the data for the two specific colors (refer to Steps S301, S302, and S207). The seventh drive operation is an example of the second pre-adjustment operation.

When the reference pixel data is determined to be the data for black after the fourth or seventh drive operation is performed, the unit driving apparatus 17 performs the fifth drive operation at least once until the reference pixel data is determined to be the data for white (refer to Steps S203 and S204). The fifth drive operation is an example of the first rough adjustment operation.

When the reference pixel data is determined to be the data for white after the fifth or seventh drive operation is performed, the unit driving apparatus 17 performs the sixth drive operation (refer to Steps S204 and S205). The sixth drive operation is an example of the second rough adjustment operation.

When the reference pixel data is determined to be the data for black after the sixth drive operation in Step S205 or the seventh drive operation in Step S207 is performed, the unit driving apparatus 17 performs the processes of Steps S303 and S304 (refer to Fig. 12).

In Steps S303 and S304, the unit driving apparatus 17 performs the third drive operation at least once until the reference pixel data is determined to be the data for white. The third drive operation is an example of the minor adjustment operation.

When the reference pixel data is determined to be the data for white after the third drive operation is performed, the unit driving apparatus 17 performs the completion drive operation (refer to Steps S304 and S305). The scanning unit 10 is positioned at the home position P1 by the completion drive operation being performed.

The adoption of the image reading apparatus 1A also provides effects similar to the effects provided by the adoption of the image reading apparatus 1.

### First Modification

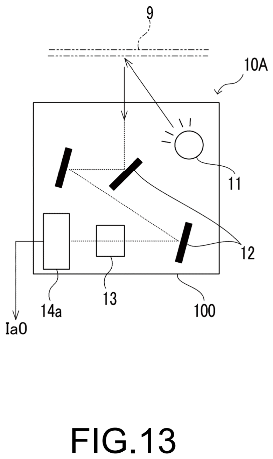

A first modification of the image reading apparatus 1 or the image reading apparatus 1A is described below with reference to Fig. 13.

An image reading apparatus according to the first modification has a configuration obtained by replacing the scanning unit 10 of the image reading apparatus 1 or the image reading apparatus 1A with a scanning unit 10A illustrated in Fig. 13.

The scanning unit 10A includes the light emitter 11, at least one mirror 12, the lens 13, an image sensor 14a, and the carriage 100. The carriage 100 supports the light emitter 11, the mirror 12, the lens 13, and the image sensor 14a.

The mirror 12 and the lens 13 are an example of a light guiding member that guides the reflected light to the image sensor 14a. The image sensor 14a is a charge-coupled-device (CCD)-type line sensor.

As in the case of the image sensor 14, the image sensor 14a receives light guided by the light guiding member, and outputs the line image signal la0 representing an amount of light received. The adoption of this modification also provides effects similar to the effects provided by the adoption of the image reading apparatus 1 or the image reading apparatus 1A.

### Second Modification

Next, a second modification of the image reading apparatus 1 or the image reading apparatus 1A is described. This modification is a modification of the first modification.

In this modification, the carriage 100 is divided into a first carriage and a second carriage that move at different speeds. The first carriage supports the light emitter 11 and a portion of a plurality of the mirrors 12, and the second carriage supports another portion of the plurality of the mirrors 12.

Further, the lens 13 and the image sensor 14a are secured within the body 101.

Further, the mirror 12 supported by the first carriage guides light reflected off the document 9 to the mirror 12 supported by the second carriage, and the mirror 12 supported by the second carriage guides light to the lens 13 and the image sensor 14a that are secured within the body 101. The adoption of this modification also provides effects similar to the effects provided by the adoption of the first modification.

### Third Modification

Next, a third modification of the image reading apparatus 1 is described.

In this modification, with respect to the colors of the lower surfaces of the first reference portion 23a, the second reference portion 23b, the third reference portion 23c, the fourth reference portion 23d, and the end reference portion 23e, white and black are inverted, compared to the case of the image reading apparatus 1. In other words, the first color and the second specific color are white, and the second color is black in this modification.

In this modification, the read controller 5b performs the processes in Figs. 8 and 9, with white and black being inverted. The adoption of this modification also provides effects similar to the effects provided by the adoption of the image reading apparatus 1.

### Fourth Modification

Next, a fourth modification of the image reading apparatus 1 is described.

In this modification, the first white base portion 21 and the second reference portion 23b are arranged at reversed positions, compared to the arrangement of the first white base portion 21 and the second reference portion 23b in the image reading apparatus 1.

In this modification, the second white base portion 22 includes the second reference portion 23b. In other words, one of the end portions of the second white base portion 22 in the primary scanning direction D1 is the second reference portion 23b.

In this modification, the first white base portion 21 includes the fourth reference portion 23d. In other words, one of the end portions of the first white base portion 21 in the primary scanning direction D1 is the fourth reference portion 23d.

The adoption of this modification also provides effects similar to the effects provided by the adoption of the image reading apparatus 1.

### Fifth Modification

Next, a fifth modification that is a modification of the image reading apparatus 1A is described.

In this modification, with respect to the colors of the lower surfaces of the first reference portion 23a, the second reference portion 23b, the third reference portion 23c, and the end reference portion 23e, white and black are inverted, compared to the case of the image reading apparatus 1A. In other words, the first color is white, and the second color is black in this modification.

In this modification, the read controller 5b performs the processes in Figs. 12 and 9, with white and black being inverted. The adoption of this modification also provides effects similar to the effects provided by the adoption of the image reading apparatus 1A.

### Sixth Modification

Next, a sixth modification that is a modification of the image reading apparatus 1, 1A is described.

In this modification, the end reference portion 23e includes a lower surface including surfaces of three or more specific colors that are aligned in the primary scanning direction D1.

In this modification, the image processing section 5c determines whether the reference pixel data is data for white, data for black, data for the three or more specific colors, or data for the exceptional color other than white, black, and the three or more specific colors.

The adoption of this modification also provides effects similar to the effects provided by the adoption of the image reading apparatus 1, 1A.

It is to be understood that the embodiments herein are illustrative and not restrictive, since the scope of the disclosure is defined by the appended claims.

## Claims

1. An image reading apparatus (1), comprising:
a platen plate portion (16a) on which a document is placed, the platen plate portion (16a) being in the form of a transparent plate;
a contact plate portion (16b) that is arranged on a side of the platen plate portion (16a) in a first direction, the contact plate portion (16b) being in the form of a transparent plate;
a document transportation apparatus (15) that transports the document along a transportation path that passes on an upper surface of the contact plate portion (16b);
a scanning unit (10) that includes a light emitter (11) and a light guiding section (13) that are each arranged in a primary scanning direction that intersects the first direction, the scanning unit (10) being movable in a movable region in the first direction and in a second direction opposite to the first direction, the movable region including a region under the platen plate portion (16a) and a region under the contact plate portion (16b);
a primary image sensor (14) that receives light guided by the light guiding section (13) and that outputs a line image signal that represents an amount of light received;
a unit driving apparatus (17) that moves the scanning unit (10) in the first direction or the second direction in the movable region;
a data processing section (5c) that performs processing on line image data including a plurality of pieces of pixel data and corresponding to the line image signal output by the primary image sensor (14);
a first reference portion (23a) that is arranged along a side edge that forms an end of the platen plate portion (16a) in the primary scanning direction, the first reference portion (23a) including a lower surface of a first color;
a second reference portion (23b) that is arranged between the first reference portion (23a) and the contact plate portion (16b) to be adjacent to the first reference portion (23a) in the first direction, the second reference portion (23b) including a lower surface of a second color different from the first color; and
an end reference portion (23e) that is arranged in an end region of the movable region in the second direction to be adjacent to the first reference portion (23a) in the second direction, the end reference portion (23e) including a lower surface that includes surfaces of a plurality of specific colors that are aligned in the primary scanning direction, wherein
the contact plate portion (16b) is arranged across a target region and a reference region in the primary scanning direction, the target region being occupied by the platen plate portion (16a), the reference region being occupied by the first reference portion (23a), the second reference portion (23b), and the end reference portion (23e),
one of the plurality of specific colors is a color different from the first color and the second color,
the data processing section (5c) performs a color determination process to determine whether reference pixel data is data for the first color, data for the second color, or data for the plurality of specific colors, the reference pixel data being a plurality of pieces of pixel data being included in the line image data and corresponding to the reference region, and
the unit driving apparatus (17) performs drive operations to position the scanning unit (10) at a home position situated between the platen plate portion (16a) and the contact plate portion (16b) in the movable region, the drive operations performed by the unit driving apparatus (17) being successively selected from a plurality of trial drive operations according to a determination result obtained by the color determination process, the scanning unit (10) being moved a different distance or in a different direction in each of the plurality of trial drive operations.

2. The image reading apparatus (1) according to claim 1, further comprising
a white base portion (22) that is arranged in the primary scanning direction in a region situated between the platen plate portion (16a) and the contact plate portion (16b) in a secondary scanning direction extending in parallel with the first direction and the second direction, the white base portion (22) including a white lower surface, wherein
the second color is white, and
the white base portion (22) includes the second reference portion (23b).

3. The image reading apparatus (1) according to claim 2, further comprising:
a single transparent glass plate (16) that includes the platen plate portion (16a) and the contact plate portion (16b); and
a glass cover member (18) that is arranged to overlap an upper surface of the glass plate (16), wherein
a first opening (18a) through which a portion of the glass plate (16) is exposed, and a second opening (18b) through which another portion of the glass plate (16) is exposed are formed in the glass cover member (18), the portion including the platen plate portion (16a), the other portion including the contact plate portion (16b),
the glass cover member (18) includes the first reference portion (23a), and
the white base portion (22) is arranged in a lower surface of a portion of the glass cover member (18) between the first opening (18a) and the second opening (18b).

4. The image reading apparatus (1) according to any one of claims 1 to 3, wherein
the plurality of trial drive operations includes
a first pre-adjustment operation in which the unit driving apparatus (17) moves the scanning unit (10) a first pre-adjustment distance in the second direction when the reference pixel data is determined to not be data for the plurality of specific colors,
a second pre-adjustment operation in which the unit driving apparatus (17) moves the scanning unit (10) a second pre-adjustment distance in the first direction when the reference pixel data is determined to be the data for the plurality of specific colors, the second pre-adjustment distance being larger than the first pre-adjustment distance,
a first rough adjustment operation in which, when the reference pixel data is determined to be data for the first color after the first pre-adjustment operation or the second pre-adjustment operation is performed, the unit driving apparatus (17) moves the scanning unit (10) a rough adjustment distance in the first direction until the reference pixel data is determined to be data for the second color, the first rough adjustment operation being performed at least once, the rough adjustment distance being smaller than the first pre-adjustment distance,
a second rough adjustment operation in which, when the reference pixel data is determined to be the data for the second color after the first rough adjustment operation or the second rough adjustment operation is performed, the unit driving apparatus (17) moves the unit driving apparatus (10) the rough adjustment distance in the second direction,
a minor adjustment operation in which, when the reference pixel data is determined to be the data for the first color after the second rough adjustment operation is performed, the unit driving apparatus (17) moves the scanning unit (10) a reference distance in the first direction until the reference pixel data is determined to be the data for the second color, the minor adjustment operation being performed at least once, the reference distance being smaller than the rough adjustment distance, and
a completion drive operation in which, when the reference pixel data is determined to be the data for the second color after the minor adjustment operation is performed, the unit driving apparatus (17) moves the scanning unit (10) a final adjustment distance in the first direction to position the scanning unit (10) at the home position.

5. The image reading apparatus (1) according to claim 1, further comprising:
a third reference portion (23c) that is arranged between the second reference portion (23b) and the contact plate portion (16b) to be adjacent to the second reference portion (23b) in the first direction, the third reference portion (23c) including a lower surface of the first color; and
a fourth reference portion (23d) that is arranged between the third reference portion (23c) and the contact plate portion (16b) to be adjacent to the third reference portion (23c) in the first direction, the fourth reference portion (23d) including a lower surface of the second color.

6. The image reading apparatus (1) according to claim 5, further comprising:
a first white base portion (21) that is arranged in the primary scanning direction in a region situated between the platen plate portion (16a) and the contact plate portion (16b) in a secondary scanning direction extending in parallel with the first direction and the second direction, the first white base portion (21) including a white lower surface;
a second white base portion (22) that is arranged in the primary scanning direction in a region situated between the platen plate portion (16a) and the contact plate portion (16b) in the secondary scanning direction, the second white base portion (22) including a white upper surface; and
a secondary image sensor (14) that is arranged to face the upper surface of the second white base portion (22), the secondary image sensor (14) reading an image on an upper side of the document transported by the document transportation apparatus (15), wherein
the second color is white,
one of the first white base portion (21) and the second white base portion (22) includes the second reference portion (23b), and
another of the first white base portion (21) and the second white base portion (22) includes the fourth reference portion (23d).

7. The image reading apparatus (1) according to claim 6, further comprising:
a single transparent glass plate (16) that includes the platen plate portion (16a) and the contact plate portion (16b); and
a glass cover member (18) that is arranged to overlap an upper surface of the glass plate (16), wherein
a first opening (18a) through which a portion of the glass plate (16) is exposed, and a second opening (18b) through which another portion of the glass plate (16) is exposed are formed in the glass cover member (18), the portion including the platen plate portion (16a), the other portion including the contact plate portion (16b),
the glass cover member (18) includes the first reference portion (13a) and the third reference portion (23c),
the first white base portion (21) is arranged in a lower surface of a portion of the glass cover member (18) between the first opening (18a) and the second opening (18b), the first white base portion (21) including the second reference portion (23b), and
the second white base portion (22) is arranged in a region within the second opening (18b) of the glass cover member (18) on the upper surface of the glass plate (16) to be adjacent to the contact plate portion (16b) in the second direction, the second white base portion (22) including the fourth reference portion (23d).

8. The image reading apparatus (1) according to any one of claims 5 to 7, wherein
the plurality of trial drive operations includes
a first check operation in which the unit driving apparatus (17) moves the scanning unit (10) a first check distance in the first direction when the reference pixel data is determined to be data for the second color,
a second check operation in which, when the reference pixel data is determined to be the data for the second color after the first check operation is performed, the unit driving apparatus (17) moves the scanning unit (10) a second check distance in the second direction,
a first pre-adjustment operation in which the unit driving apparatus (17) moves the scanning unit (10) a first pre-adjustment distance in the second direction when the reference pixel data is determined to be data different from the data for the second color and data for the plurality of specific colors,
a second pre-adjustment operation in which the unit driving apparatus (17) moves the scanning unit (10) a second pre-adjustment distance in the first direction when the reference pixel data is determined to be the data for the plurality of specific colors, the second pre-adjustment distance being larger than the first pre-adjustment distance,
a first rough adjustment operation in which, when the reference pixel data is determined to be data for the first color after the first pre-adjustment operation or the second pre-adjustment operation is performed, the unit driving apparatus (17) moves the scanning unit (10) a rough adjustment distance in the first direction until the reference pixel data is determined to be the data for the second color, the first rough adjustment operation being performed at least once, the rough adjustment distance being smaller than the first pre-adjustment distance,
a second rough adjustment operation in which, when the reference pixel data is determined to be the data for the second color after the first rough adjustment operation or the second pre-adjustment operation is performed, the unit driving apparatus (17) moves the scanning unit (10) the rough adjustment distance in the second direction,
a minor adjustment operation in which, when the reference pixel data is determined to be the data for the first color after the second check operation or the second rough adjustment operation is performed, the unit driving apparatus (17) moves the scanning unit (10) a reference distance in the first direction until the reference pixel data is determined to be the data for the second color, the minor adjustment operation being performed at least once, the reference distance being smaller than the rough adjustment distance, and
a completion drive operation in which, when the reference pixel data is determined to be the data for the second color after the minor adjustment operation is performed, the unit driving apparatus (17) moves the scanning unit (10) a final adjustment distance in the first direction to position the scanning unit (10) at the home position.

9. The image reading apparatus (1) according to any one of claims 1 to 8, wherein
the scanning unit (10) includes a contact image sensor unit that includes the light emitter (11), the light guiding member (13) serving as a condenser, and the primary image sensor (14) of a CMOS type.

10. The image reading apparatus (1) according to any one of claims 1 to 9, wherein
a length of the end reference portion (23e) in a secondary scanning direction extending in parallel with the first direction and the second direction is greater than or equal to a distance from an end of the movable region in the first direction to an end of the first reference portion (23a) in the first direction.

11. The image reading apparatus (1) according to any one of claims 1 to 10, wherein
the first color is black,
the second color is white,
a first specific color that is one of the plurality of specific colors is one of red, green, blue, yellow, magenta, and cyan, and
another one of the plurality of specific colors is black.
